# EUROPEAN PATENT APPLICATION

(11) **EP 4 721 930 A1**
(43) Date of publication of application: **08.04.2026**
(21) Application number: 24211228.2
(22) Date of filing: 06.11.2024
(51) Int. Cl.: B25J 9/06, B25J 9/08, B25J 17/00, B25J 19/00, B25J 19/06

(54) **JOINT STRUCTURE AND CONTINUUM ROBOT INCLUDING THE SAME**

(30) Priority: 07.10.2024 KR 20240136010
(71) Applicant: Korea Institute of Science and Technology, Seoul 02792 (KR)
(72) Inventor: HWANG, Donghyun, Seoul (KR); SONG, Chang Seob, Seoul (KR); LEE, Tae Rim, Seoul (KR)
(74) Representative: Appleyard Lees IP LLP

(57) **Abstract**

Provided is a variable stiffness joint structure including a central module, a pressing module that surrounds the central module, and has a grip position in which the central module is radially pressed to block rotation of the central module, and a rotation position in which the central module is released to allow rotation of the central module, and a driving module configured to provide a driving force to move the pressing module from the rotation position to the grip position, wherein the pressing module includes at least one pressing member arranged in a circumferential direction to surround an outer circumferential surface of the central module.

## Description

### CROSS-REFERENCE TO RELATED APPLICATION

This application is based on and claims priority under 35 U.S.C. §119 to Korean Patent Application No. 10-2024-0136010, filed on October 7, 2024, in the Korean Intellectual Property Office, the disclosure of which is incorporated by reference herein in its entirety.

### BACKGROUND

### 1. Field

The disclosure relates to a variable stiffness joint structure and a continuum robot including the same.

### 2. Description of the Related Art

Continuum robots may have a high degree of freedom and a large number of joints to achieve high flexibility. These continuum robots are able to dynamically adjust and modify their shapes, allowing them to flexibly transform in confined spaces or complex environments.

For example, a continuum robot may flexibly enter narrow spaces, such as semiconductor processing equipment, and then increase its stiffness to perform various maintenance or repair tasks. Such continuum robots may include variable stiffness joint structures of which the stiffness is selectively adjustable.

### SUMMARY

In an embodiment, a variable stiffness joint structure having a novel joint structure may provide a high response speed and a wide stiffness range.

Additional aspects will be set forth in part in the description which follows and, in part, will be apparent from the description, or may be learned by practice of the presented embodiments of the disclosure.

According to an embodiment, a variable stiffness joint structure includes a central module, a pressing module that surrounds the central module, and has a grip position in which the central module is radially pressed to block rotation of the central module, and a rotation position in which the central module is released to allow rotation of the central module, and a driving module configured to provide a driving force to move the pressing module from the rotation position to the grip position.

The pressing module may include at least one pressing member arranged in a circumferential direction to surround an outer circumferential surface of the central module, and when the pressing module is in the grip position, the at least one pressing member may be in a contraction position to be radially retracted, and when the pressing module is in the rotation position, the at least one pressing member may be in an expansion position to be radially extended.

The at least one pressing member may include a plurality of pressing members, and a spacing between the plurality of pressing members when the plurality of pressing members are in the expansion position may be greater than the spacing between the plurality of pressing members when the plurality of pressing members are in the contraction position.

The pressing module may be configured such that, when a driving force is not provided to the plurality of pressing members by the driving module, the plurality of pressing members are restored from the contraction position to the expansion position.

The pressing module may further include a hinge member that supports the plurality of pressing members such that the plurality of pressing members rotate between the contraction position and the expansion position, and the hinge member may have an elastic force such that the plurality of pressing members are restored from the contraction position to the expansion position.

The driving module may include an electropermanent magnet assembly or an electromagnet assembly.

The central module may include a plurality of circular plates arranged to face each other in a vertical direction and having circular edges.

The driving module may include a plurality of permanent magnets arranged between the plurality of circular plates to be spaced apart from each other in the circumferential direction, a plurality of variable magnets arranged between the plurality of permanent magnets to be spaced apart from each other in the circumferential direction, and a coil arranged to surround the variable magnets.

The pressing module may further include a shell module arranged in a periphery of the plurality of pressing members and configured to prevent the central module from being separated from the plurality of pressing members.

The driving module may include a ring frame that is arranged in a periphery of the plurality of pressing members and induces the plurality of pressing members to move from the expansion position to the contraction position during a vertical movement of the ring frame, and a motor to move the ring frame in a vertical direction.

The driving module may further include a pneumatic member configured to provide pneumatic pressure to move the plurality of pressing members from the expansion position to the contraction position, and the pneumatic member may be arranged between the shell module and the plurality of pressing members.

According to an embodiment, a continuum robot includes a plurality of variable stiffness joint structures, wherein at least one of the plurality of variable stiffness joint structures includes a central module, a pressing module that surrounds the central module, and has a grip position in which the central module is radially pressed to block rotation of the central module, and a rotation position in which the central module is released to allow rotation of the central module, and a driving module configured to provide a driving force to move the pressing module from the rotation position to the grip position.

The pressing module may include at least one pressing member arranged in a circumferential direction to surround an outer circumferential surface of the central module, and when the pressing module is in the grip position, the at least one pressing member may be in a contraction position to be radially retracted, and when the pressing module is in the rotation position, the at least one pressing member may be in an expansion position to be radially extended.

The central module may include a plurality of circular plates arranged to face each other in a vertical direction and having circular edges.

The driving module may include a plurality of permanent magnets arranged between the plurality of circular plates to be spaced apart from each other in the circumferential direction, a plurality of variable magnets arranged between the plurality of permanent magnets to be spaced apart from each other in the circumferential direction, and a coil arranged to surround the variable magnets.

The at least one pressing member may include a plurality of pressing members, and the pressing module may further include a shell module arranged in a periphery of the plurality of pressing members and configured to prevent the central module from being separated from the plurality of pressing members.

According to an embodiment, an electronic device includes a plurality of variable stiffness joint structures, wherein at least one of the plurality of variable stiffness joint structures includes a central module, a pressing module that surrounds the central module, and has a grip position in which the central module is radially pressed to block rotation of the central module, and a rotation position in which the central module is released to allow rotation of the central module, and a driving module configured to provide a driving force to move the pressing module from the rotation position to the grip position.

The pressing module may include at least one pressing member arranged in a circumferential direction to surround an outer circumferential surface of the central module, and when the pressing module is in the grip position, the at least one pressing member may be in a contraction position to be radially retracted, and when the pressing module is in the rotation position, the at least one pressing member may be in an expansion position to be radially extended.

The central module may include a plurality of circular plates arranged to face each other in a vertical direction and having circular edges.

The driving module may include a plurality of permanent magnets arranged between the plurality of circular plates to be spaced apart from each other in the circumferential direction, a plurality of variable magnets arranged between the plurality of permanent magnets to be spaced apart from each other in the circumferential direction, and a coil arranged to surround the variable magnets.

The at least one pressing member may include a plurality of pressing members, and the pressing module may further include a shell module arranged in a periphery of the plurality of pressing members and configured to prevent the central module from being separated from the plurality of pressing members.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a perspective view illustrating an example of a continuum robot according to an embodiment;
FIG. 2 is a perspective view illustrating an example of a variable stiffness joint structure according to an embodiment;
FIG. 3 is a diagram for describing an internal structure of the variable stiffness joint structure of FIG. 2;
FIG. 4 is a partially cut-away perspective view illustrating the variable stiffness joint structure of FIG. 2;
FIG. 5 is an exploded perspective view of a central module of a variable stiffness joint structure according to an embodiment;
FIG. 6 is an exploded perspective view of a pressing module of a variable stiffness joint structure according to an embodiment;
FIG. 7 is a cross-sectional view for describing an operation of a variable stiffness joint structure according to an embodiment;
FIG. 8 is a diagram for describing rotation of a pressing member of a variable stiffness joint structure according to an embodiment;
FIG. 9 is a cross-sectional view for describing an operation performed when a plurality of pressing members in a variable stiffness joint structure are in an expansion position, according to an embodiment;
FIG. 10 is a cross-sectional view for describing an operation performed when a plurality of pressing members in a variable stiffness joint structure are in a contraction position, according to an embodiment;
FIG. 11 is a cross-sectional view illustrating another example of a variable stiffness joint structure according to an embodiment;
FIG. 12 is a cross-sectional view illustrating another example of a variable stiffness joint structure according to an embodiment;
FIG. 13 is a cross-sectional view illustrating another example of a variable stiffness joint structure according to an embodiment; and
FIG. 14 is a cross-sectional view illustrating another example of a variable stiffness joint structure according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

Hereinafter, various embodiments will be described in detail with reference to the accompanying drawings such that those of skill in the art may easily practice the disclosure.

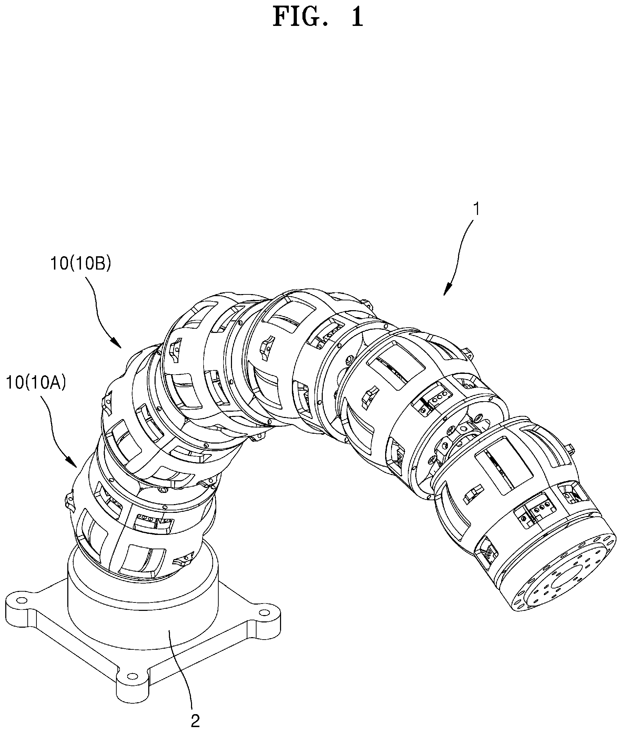

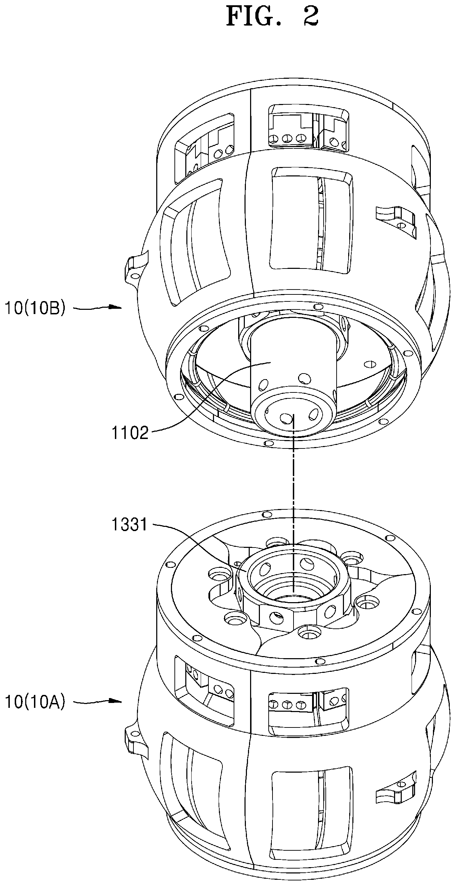

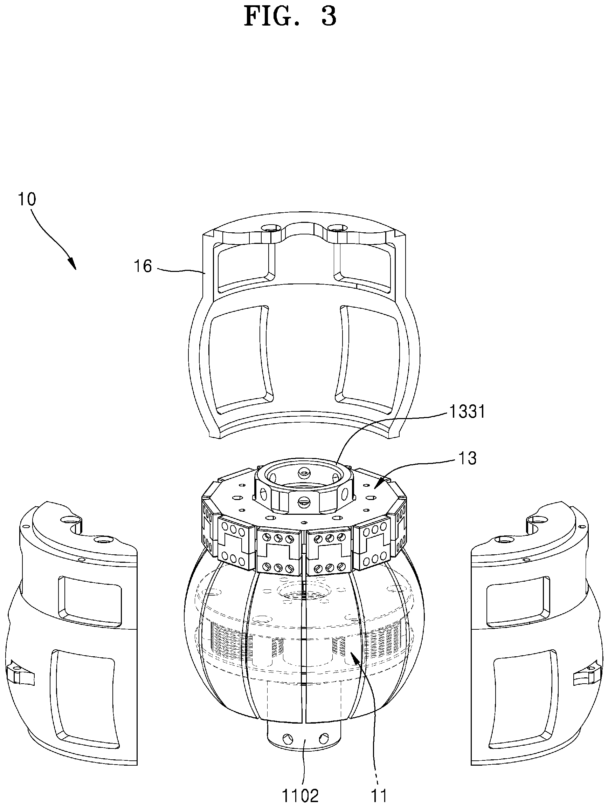

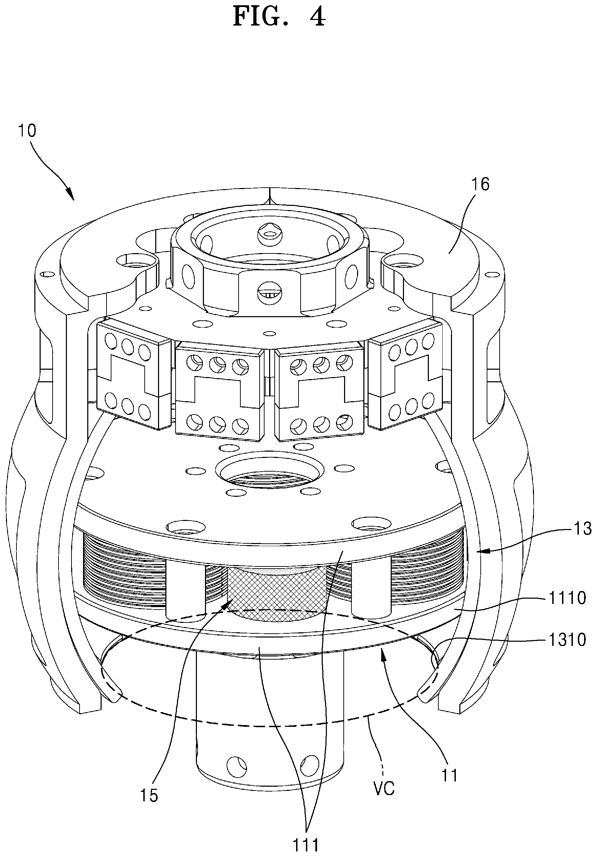

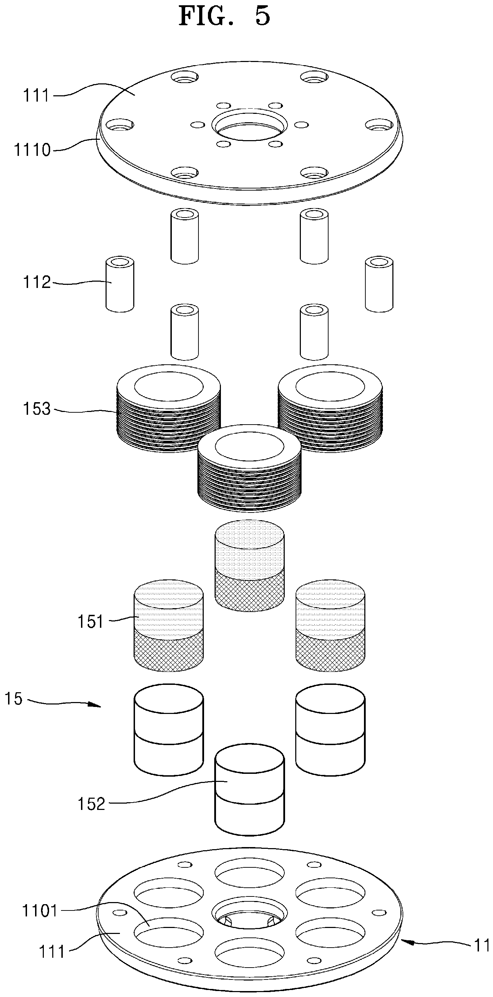

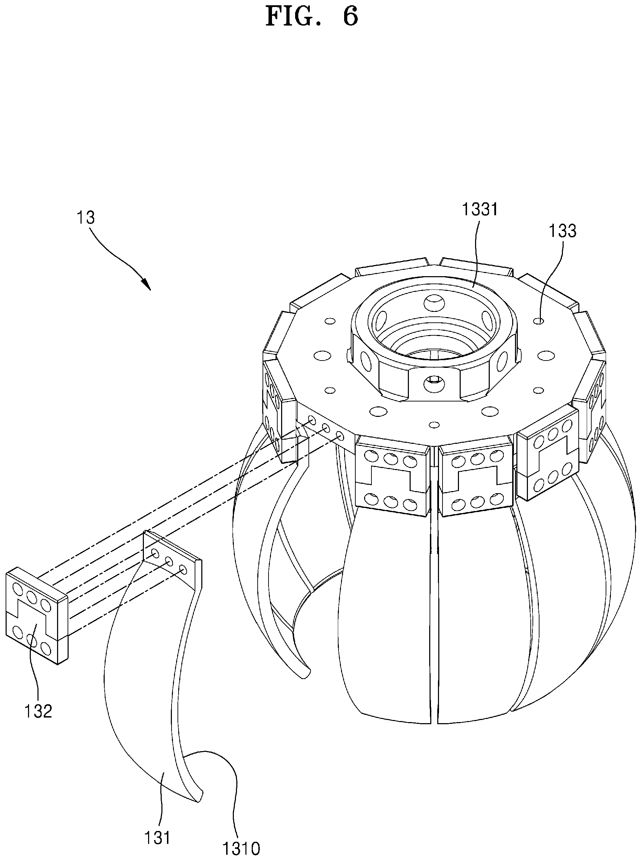

FIG. 1 is a perspective view illustrating an example of a continuum robot 1 according to an embodiment, and FIG. 2 is a perspective view illustrating an example of a variable stiffness joint structure 10 according to an embodiment. FIG. 3 is a diagram for describing an internal structure of the variable stiffness joint structure 10 of FIG. 2. FIG. 4 is a partially cut-away perspective view illustrating the variable stiffness joint structure 10 of FIG. 2. FIG. 5 is an exploded perspective view of a central module 11 of the variable stiffness joint structure 10 according to an embodiment, and FIG. 6 is an exploded perspective view of a pressing module 13 of the variable stiffness joint structure 10 according to an embodiment.

Referring to FIGS. 1 and 2, the continuum robot 1 according to an embodiment may include at least one variable stiffness joint structure 10. For example, the continuum robot 1 may include a plurality of variable stiffness joint structures 10.

The variable stiffness joint structure 10 is a structure whose stiffness is variable, and may also be referred to as a variable stiffness actuator. In the embodiment, the continuum robot 1 is described as an example of a device including the variable stiffness joint structure 10, but the variable stiffness joint structure 10 is not limited thereto and may be applied to various electronic devices.

The continuum robot 1 is operable in various forms, and to this end, may further include a tendon (not shown) for a bending behavior of the continuum robot 1, a driving unit 2 for driving the tendon, and at least one sensor (not shown). The sensor may include at least one of a sensor for detecting impact and external force, and a sensor for measuring the curvature of the bending behavior of the continuum robot 1.

The plurality of variable stiffness joint structures 10 are arranged sequentially. One variable stiffness joint structure 10 may be connected to another variable stiffness joint structure 10 adjacent thereto. For example, a first connection unit 1331 of any one variable stiffness joint structure 10A may be connected to a second connection unit 1102 of an adjacent variable stiffness joint structure 10B. The first connection unit 1331 of the adjacent variable stiffness joint structure 10B may be connected to the second connection unit 1102 of another adjacent variable stiffness joint structure 10.

One variable stiffness joint structure 10 may tilt and rotate with respect to another variable stiffness joint structure 10 adjacent thereto, and the adjacent variable stiffness joint structure 10 may tilt and rotate with respect to another variable stiffness joint structure 10 adjacent thereto. As such, the continuum robot 1 may have a high degree of freedom through the plurality of variable stiffness joint structures 10.

Referring to FIGS. 2 to 4, the variable stiffness joint structure 10 according to an embodiment may include the central module 11, the pressing module 13, and a driving module 15.

The central module 11 may be arranged at the center of the variable stiffness joint structure 10 and may be fixed to the first connection unit 1331. The pressing module 13 may surround the central module 11 and may be fixed to the second connection unit 1102.

The central module 11 and the pressing module 13 may perform a ball-socket joint function. The central module 11 may function as a ball portion of a ball-socket joint, and the pressing module 13 may function as a socket portion of the ball-socket joint. The pressing module 13 may rotate with respect to the central module 11. In other words, the central module 11 may rotate with respect to the pressing module 13. At least a portion of an outer circumferential surface 1110 of the central module 11 may have a curved surface. An inner circumferential surface 1310 of the pressing module 13 may have a curved surface corresponding to the outer circumferential surface 1110 of the central module 11. Accordingly, the central module 11 may rotate freely within the pressing module 13.

Referring to FIGS. 4 and 5, the outer circumferential surface 1110 of the central module 11 may have a curved surface in a horizontal direction. For example, the central module 11 may have a plurality of circular plates 111 having circular edges. The inner circumferential surface 1310 of the pressing module 13 may have a curved surface in the horizontal direction to correspond to the outer circumferential surface 1110 of the central module 11. Accordingly, the pressing module 13 may rotate with respect to the central module 11 in the horizontal direction.

The outer circumferential surface 1110 of the central module 11 may have a curved surface in a vertical direction. For example, the outer circumferential surface of the circular plate 111 may have a curved surface in the vertical direction. The inner circumferential surface 1310 of the pressing module 13 may have a curved surface in the vertical direction to correspond to the outer circumferential surface 1110 of the central module 11. Accordingly, the pressing module 13 may rotate with respect to the central module 11 in the vertical direction.

The plurality of circular plates 111 may be arranged to be spaced apart from each other in the vertical direction. A spacer 112 may be arranged between the plurality of circular plates 111. The circular plate 111 may have a circular edge in the horizontal direction, and the outer circumferential surface of the circular plate 111 may have a curved surface in the vertical direction. The outer diameter of the circular plate 111 arranged at the top may increase downward, and the outer diameter of the circular plate 111 arranged at the bottom may decrease downward. FIG. 5 illustrates two circular plates 111 as an example of the plurality of circular plates 111, but the disclosure is not limited thereto and three or more circular plates 111 may be provided.

The driving module 15 to be described below may be arranged between the plurality of circular plates 111. At least one of the plurality of circular plates 111 may be provided with grooves 1101 in which permanent magnets 151 and variable magnets 152 of the driving module 15 are arranged.

The plurality of circular plates 111 may be configured to block lines of magnetic force of the driving module 15 in the vertical direction. For example, the plurality of circular plates 111 may be arranged on and below the permanent magnets 151 and the variable magnets 152 of the driving module 15. For example, the plurality of circular plates 111 may include steel. The circular plate 111 arranged on the driving module 15 may block the lines of magnetic force in an upward direction. The circular plate 111 arranged below the driving module 15 may block the lines of magnetic force in a downward direction.

Referring to FIGS. 3, 4, and 6, the pressing module 13 may include at least one pressing member 131 that is radially expandable and contractible. The at least one pressing member 131 may be arranged in the circumferential direction along the outer circumferential surface of the central module 11. The at least one pressing member 131 may include a plurality of pressing members 131.

The pressing module 13 may include a support 133 that supports the plurality of pressing members 131 such that the plurality of pressing members 131 expand or contract radially. The first connection unit 1331 may be provided in the support 133. The variable stiffness joint structure 10 may be connected to another variable stiffness joint structure 10 through the first connection unit 1331 of the support 133.

At least a portion of the inner circumferential surface 1310 of each of the plurality of pressing members 131 may have a curved surface. The curved surface of the inner circumferential surface 1310 of the pressing member 131 may correspond to the curved surface of the outer circumferential surface 1110 of the central module 11. The radius of curvature of the inner circumferential surface 1310 of the pressing member 131 may correspond to the radius of curvature of the outer circumferential surface 1110 of the central module 11.

The plurality of pressing members 131 may be arranged in the circumferential direction along the outer circumferential surface of the central module 11. As the plurality of pressing members 131 arranged in the circumferential direction contract or expand radially with respect to the central module 11, the central module 11 may be radially pressed or released by the pressing members 131.

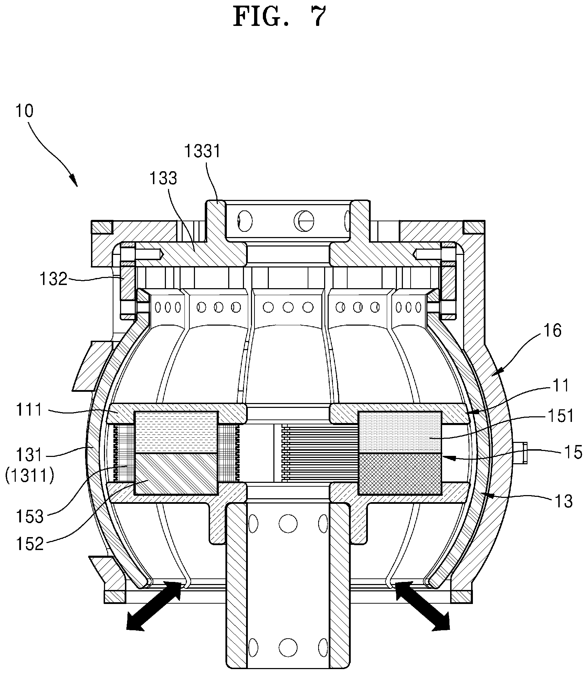

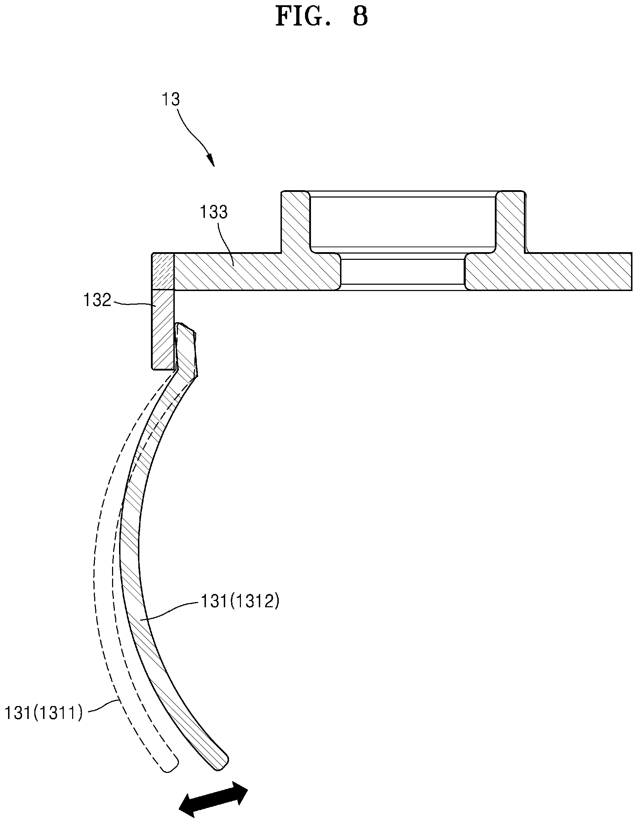

FIG. 7 is a cross-sectional view for describing an operation of the variable stiffness joint structure 10 according to an embodiment, and FIG. 8 is a diagram for describing rotation of the pressing member 131 of the variable stiffness joint structure 10 according to an embodiment. For convenience of description, in FIG. 8, one of the plurality of pressing members 131 is illustrated, and the other pressing members 131 are omitted.

Referring to FIGS. 7 and 8, the support 133 may support the plurality of pressing members 131 to be rotatable. For example, the support 133 may support each of the plurality of pressing members 131 to be rotatable around one end of the plurality of pressing members 131. For example, the support 133 may include a hinge member 132 that supports the plurality of pressing members 131 to be rotatable.

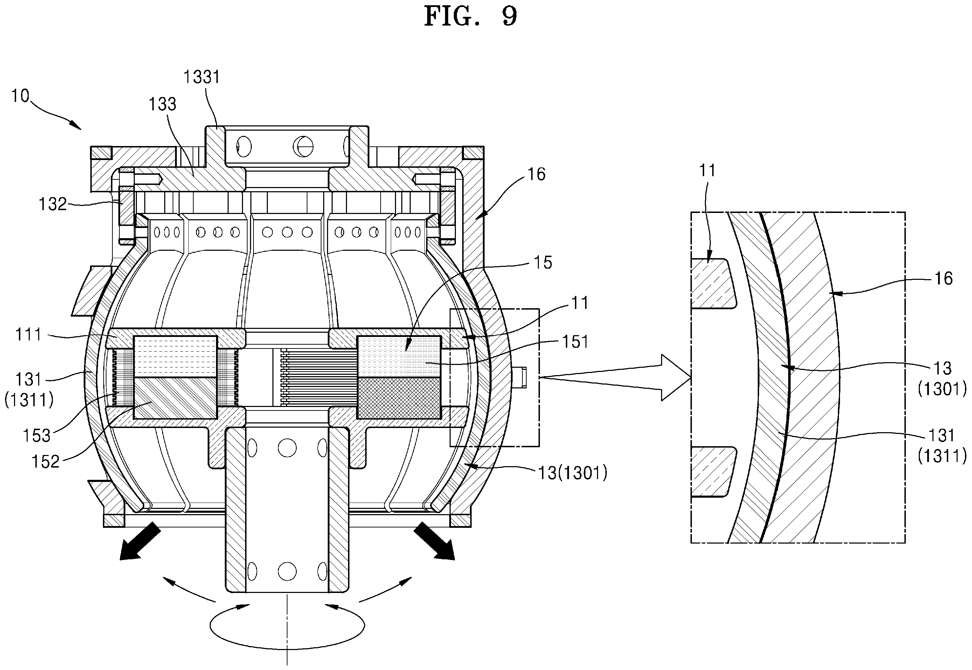

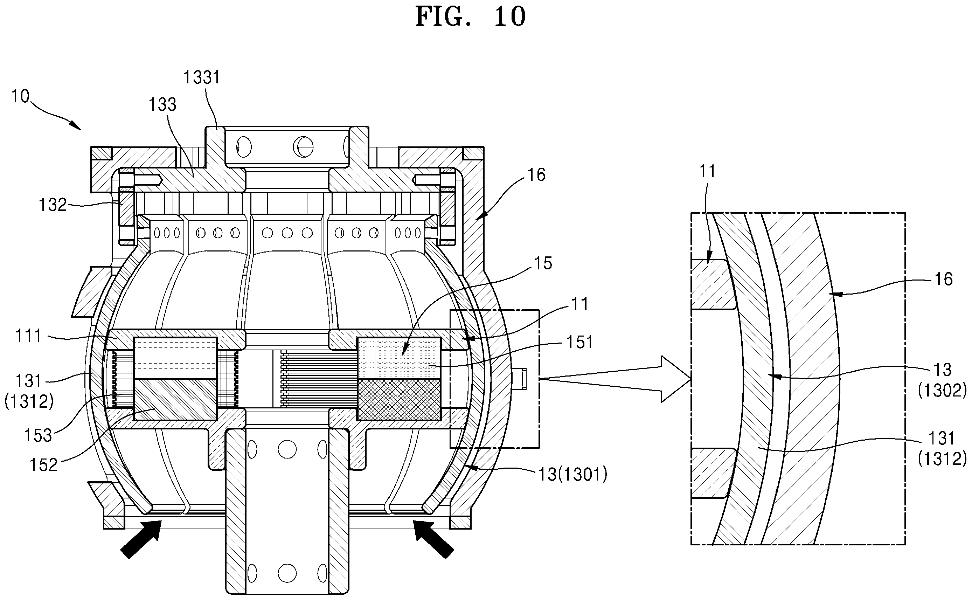

The pressing module 13 may include a rotation position 1301 (see FIG. 9) for allowing rotation with respect to the central module 11, and a grip position 1302 (see FIG. 10) for blocking rotation with respect to the central module 11. When the pressing module 13 is in the rotation position 1301, the pressing module 13 may function as a socket portion that allows free rotation of the central module 11. On the contrary, when the pressing module 13 is in the grip position 1302, the pressing module 13 may pressurize the central module 11 to block free rotation of the central module 11. As such, the function performed by the pressing module 13 in the rotation position 1301 and the function performed by the pressing module 13 in the grip position 1302 may be different from each other. Here, free rotation may be defined as a state in which rotation and tilting are freely performed.

When the pressing module 13 is in the rotation position 1301, the plurality of pressing members 131 may be in an expansion position 1311 to be radially expanded, and when the pressing module 13 is in the grip position 1302, the plurality of pressing members 131 may be in a contraction position 1312 to be radially contracted.

The plurality of pressing members 131 expand or contract radially, and thus, a spacing between the plurality of pressing members 131 may vary. The spacing between the plurality of pressing members 131 when the plurality of pressing members 131 are in the expansion position 1311 may be greater than the spacing between the plurality of pressing members 131 when the plurality of pressing members 131 are in the contraction position 1312. When the plurality of pressing members 131 are in the expansion position 1311, the spacing between the plurality of pressing members 131 may decrease toward the hinge member 132. For example, when the plurality of pressing members 131 are in the expansion position 1311, the spacing between the plurality of pressing members 131 at a position close to the hinge member 132 may be less than the spacing between the plurality of pressing members 131 at a position far from the hinge member 132.

The plurality of pressing members 131 may move between the contraction position 1312 in which they come into frictional contact with the outer circumferential surface 1110 of the central module 11, and the expansion position 1311 in which at least some of the plurality of pressing members 131 are spaced from the outer circumferential surface 1110 of the central module 11.

The plurality of pressing members 131 may be moved from the expansion position 1311 to the contraction position 1312 by the driving module 15. The driving module 15 may be configured to provide a magnetic force to the pressing module 13 to move the plurality of pressing members 131 to the contraction position 1312.

Referring back to FIG. 5, the driving module 15 may include an electropermanent magnet assembly. For example, the driving module 15 may include a plurality of permanent magnets 151, a plurality of variable magnets 152 arranged between the plurality of permanent magnets 151, and a plurality of coils 153 arranged to surround the plurality of variable magnets 152.

For example, the plurality of permanent magnets 151 may be arranged to be spaced apart from each other in the circumferential direction between the plurality of circular plates 111. The plurality of variable magnets 152 may be arranged to be spaced apart from each other in the circumferential direction between the plurality of circular plates 111.

The permanent magnet 151 may be determined by considering the magnetic flux density. The permanent magnet 151 may be configured to have a high magnetic flux density. For example, the permanent magnet 151 may include a neodymium magnet. For example, the permanent magnet 151 may include an NdFeB magnet.

The variable magnet 152 may include an AINiCo magnet. The magnetization direction of the variable magnet 152 may vary depending on the direction of the current applied to the coil 153. For example, when a forward or reverse current flows through the coil 153, the variable magnet 152 may respond to the lines of magnetic force induced in the coil 153 such that the magnetization direction of the variable magnet 152 may change.

Depending on the magnitude of the magnetic force provided to the plurality of pressing members 131, the frictional force between the plurality of pressing members 131 and the central module 11 may change, and the stiffness of the variable stiffness joint structure 10 may vary.

The driving module 15 according to an embodiment may have high stiffness and fast responsiveness as the electropermanent magnet assembly is used. For example, the electropermanent magnet assembly may have high-speed responsiveness due to the use of high-speed electric and magnetic phenomena within 10 milliseconds (ms), and thus may react quickly to external conditions. In addition, the electropermanent magnet assembly may control the magnitude of the magnetic force according to the magnitude of a voltage applied and the pulse time when switching, thereby adjusting the magnitude of the frictional force between the pressing member 131 and the central module 11. Accordingly, the variable stiffness joint structure 10 may be adjusted to the required high stiffness depending on the external conditions.

The variable stiffness joint structure 10 according to an embodiment may reduce energy consumption by using an electropermanent magnet assembly as the driving module 15. The electropermanent magnet assembly requires only a small amount of electric energy when switching the magnetization direction of the variable magnet 152, and does not require additional electric energy after the magnetization direction is switched. Accordingly, the energy required for change and maintenance of the stiffness of the variable stiffness joint structure 10 using an electropermanent magnet assembly may be small.

In the above-described embodiment, the electropermanent magnet assembly is described as an example for the driving module 15 to use a magnetic force, but the configuration of the driving module 15 is not limited thereto. For example, the driving module 15 may include an electromagnet assembly. The driving module 15 may include an electropermanent magnet assembly or an electromagnet assembly. The configuration of the electromagnet assembly is a general configuration, and thus, a detailed description thereof will be omitted.

In the above-described embodiment, the example in which the at least one pressing member 131 includes the plurality of pressing members 131 is mainly described, but the disclosure is not limited thereto. For example, the at least one pressing member 131 may include one pressing member. When the number of pressing members 131 is one, the pressing member 131 may selectively pressurize the central module 11 through elastic contraction and expansion.

Referring back to FIG. 6, the pressing module 13 according to an embodiment may be configured such that, when the driving force by the driving module 15 is not applied to the plurality of pressing members 131, the plurality of pressing members 131 are positioned in the expansion position 1311. For example, the plurality of pressing members 131 may be configured to be restored from the contraction position 1312 to the expansion position 1311 when the driving module 15 is switched from an on state to an off state.

For example, the pressing module 13 may be configured to apply an elastic bias to the plurality of pressing members 131 to move from the contraction position 1312 to the expansion position 1311.

For example, the hinge member 132 that supports the plurality of pressing members 131 to be rotatable may have elasticity. When the driving module 15 is in the off state, the hinge member 132 may provide a restoring force that moves the plurality of pressing members 131 from the contraction position 1312 to the expansion position 1311.

As an example for the hinge member 132 to have elasticity, the hinge member 132 may be a bendable plastic member. For example, the hinge member 132 may be manufactured by laser-cutting a polypropylene plate. A fold line may be formed on the polypropylene plate by using a laser beam, and the hinge member 132 may be bendable around the fold line. In the embodiment, the structure and material of the hinge member 132 are exemplified as a configuration for restoring the plurality of pressing members 131 to the expansion position 1311, but are not limited thereto and may vary. For example, although not illustrated, a component separate from the hinge member 132 may be used as a component for the plurality of pressing members 131 to be restored to the expansion position 1311.

Referring back to FIGS. 3 and 4, the variable stiffness joint structure 10 may further include shell modules 16 arranged in the periphery of the plurality of pressing members. The shell modules 16 may limit the range in which the plurality of pressing members 131 may rotate outward. The shell modules 16 may be arranged in the periphery of the pressing module 13.

The shell modules 16 may limit the range of rotation of the pressing member 131 so as to prevent the central module 11 from being separated from the pressing module 13. By means of the shell modules 16, the range of rotation of the plurality of pressing members 131 may be limited to 200 µm or less. When ends of the plurality of pressing members 131 draw a virtual circle VC, the diameter of the virtual circle VC may be less than the diameter of the circular plate 111. However, the range of rotation of the pressing member 131 as described above is merely an example, and may be modified as needed.

FIG. 9 is a cross-sectional view for describing an operation performed when the plurality of pressing members 131 in the variable stiffness joint structure 10 are in the expansion position 1311, according to an embodiment, and FIG. 10 is a cross-sectional view for describing an operation performed when the plurality of pressing members 131 in the variable stiffness joint structure 10 are in the contraction position 1312, according to an embodiment.

Referring to FIGS. 9 and 10, the driving module 15 may selectively provide a magnetic force to move the plurality of pressing members 131 toward the central module 11 according to switching of the magnetic force of the variable magnet 152.

For example, when a forward current flows through the coil 153, the magnetization direction of the variable magnets 152 may be opposite to the magnetization direction of the permanent magnets. As the magnetization direction of the variable magnets 152 becomes opposite to the magnetization direction of the permanent magnets, the magnetic field of the electropermanent magnet assembly may not act outside the central module 11 and may circulate inside the central module 11. At this time, no magnetic force is applied to the plurality of pressing members 131, and thus, the pressing members 131 may be positioned in the expansion position 1311 as illustrated in FIG. 9.

As such, when a forward current flows through the coil 153, the driving module 15 does not provide a magnetic force that induces movement of the plurality of pressing members 131, and thus, the relative movement of the central module 11 and the pressing module 13 may be free. This state of the driving module 15 may be defined as an off state.

On the contrary, when a reverse current flows through the coil 153, the magnetization direction of the variable magnets 152 may be identical to the magnetization direction of the permanent magnets 151. When the magnetization direction of the variable magnets 152 and the magnetization direction of the permanent magnets 151 are identical to each other, the magnetic field may act toward the outside of the central module 11. The electropermanent magnet assembly may provide a magnetic force that attracts the plurality of pressing members 131 toward the central module 11. By this magnetic force, the plurality of pressing members 131 in the contraction position 1312 pressurize the central module 11 as illustrated in FIG. 10, and a frictional force is applied between the plurality of pressing members 131 and the central module 11.

As such, when a reverse current flows through the coil 153, as a magnetic force is provided to the plurality of pressing members 131 by the driving module 15, the plurality of pressing members 131 may move from the expansion position 1311 to the contraction position 1312, and the relative movement of the central module 11 and the pressing module 13 may be restricted by the frictional force between the plurality of pressing members 131 and the central module 11. This state of the driving module 15 may be defined as an on state.

Referring to FIG. 9, in the variable stiffness joint structure 10 according to an embodiment, the driving module 15 is in the off state, and accordingly, the plurality of pressing members 131 of the pressing module 13 are positioned in the expansion position 1311. In this state, at least some of the plurality of pressing members 131 are spaced apart from the central module 11, and free relative movement between the central module 11 and the pressing module 13 is possible. Accordingly, the pressing module 13 of the variable stiffness joint structure 10 may freely rotate with respect to the central module 11.

Referring to FIG. 10, as the driving module 15 provides a magnetic attraction force that attracts the plurality of pressing members 131 toward the central module 11, the plurality of pressing members 131 move to the contraction position 1312 in contact with the outer circumferential surface 1110 of the central module 11 to pressurize the central module 11. As the plurality of pressing members 131 pressurize the central module 11, a frictional force is applied between the central module 11 and the pressing members 131. Accordingly, free rotation of the pressing module 13 of the variable stiffness joint structure 10 with respect to the central module 11 is blocked. Depending on the magnitude of the driving force provided by the driving module 15, the stiffness of the variable stiffness joint structure 10 varies.

For convenience of description, the embodiments has been described with reference to an example in which a magnetic attraction force is provided when a reverse current flows through the coil 153, but the direction of the current and whether a magnetic attraction force occurs are not limited thereto.

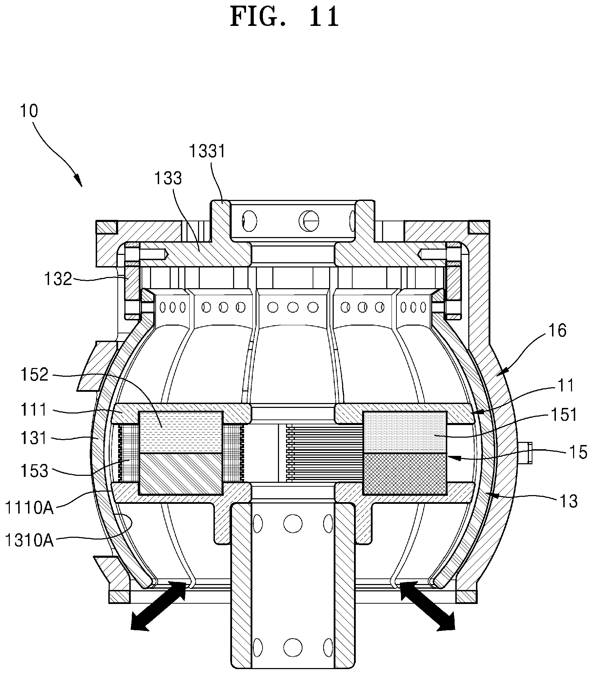

FIG. 11 is a cross-sectional view illustrating an example of the variable stiffness joint structure 10 according to an embodiment.

Referring to FIG. 11, in order to increase the frictional force between the pressing member 131 and the central module 11, the structure or material of at least one of the pressing member 131 and the central module 11 may be changed. For example, at least one of an inner circumferential surface 1310A of the pressing member 131 and an outer circumferential surface 1110A of the central module 11 may have a micro-concave-convex structure to increase surface roughness. As another example, a friction film (not shown) may be arranged on at least one of the inner circumferential surface 131 0A of the pressing member 131 and the outer circumferential surface 1110A of the central module 11. For example, the material of the friction film may be high-strength urethane with high strength and high frictional force.

Meanwhile, in the above-described embodiment, an example of a structure for the driving module 15 to provide a driving force using an electropermanent magnet, but the type of the driving module 15 is not limited thereto and may vary.

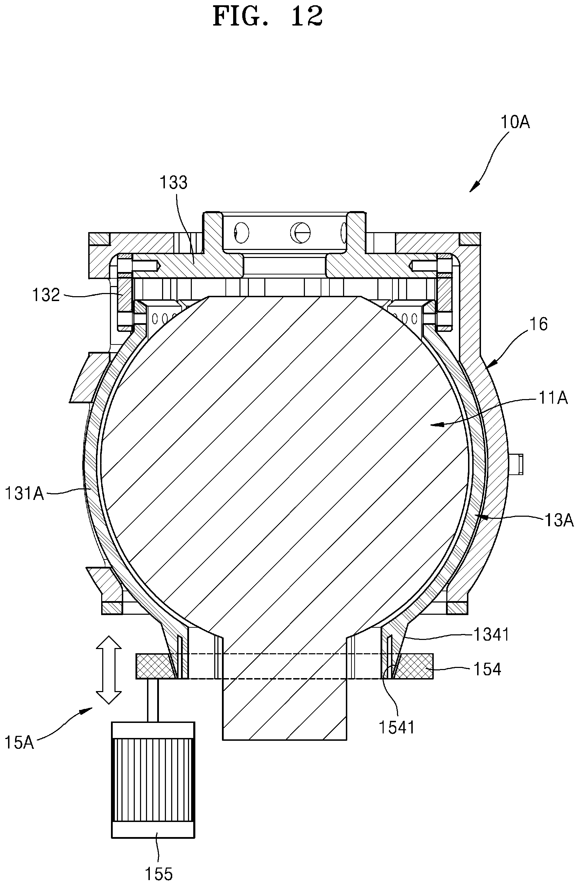

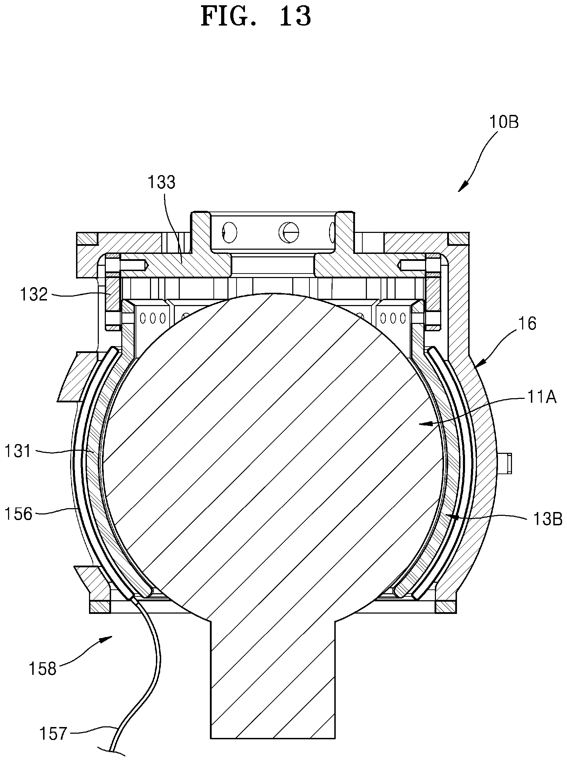

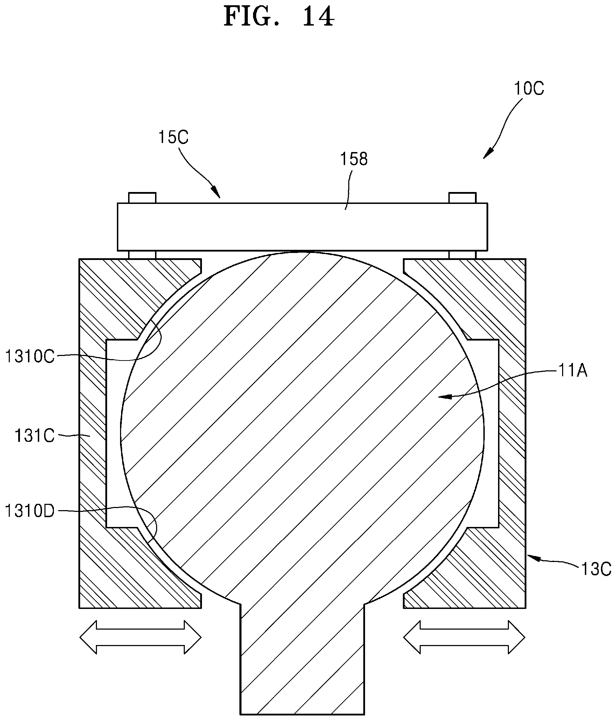

FIG. 12 is a cross-sectional view illustrating another example of the variable stiffness joint structure 10A according to an embodiment. FIG. 13 is a cross-sectional view illustrating another example of the variable stiffness joint structure 10B according to an embodiment. FIG. 14 is a cross-sectional view illustrating another example of a variable stiffness joint structure 10C according to an embodiment.

Referring to FIG. 12, the variable stiffness joint structure 10A according to an embodiment may include a central module 11A, a pressing module 13A, and a driving module 15A.

At least a portion of the outer circumferential surface 1110 of the central module 11A may have a spherical shape. For example, the outer circumferential surface 1110 of the central module 11A may have a curved surface.

A plurality of pressing members 131A may be arranged in the periphery of the central module 11A. The inner circumferential surface 1310 of the pressing member 131A may have a curved surface having a curvature corresponding to the outer circumferential surface 1110 of the central module 11A.

The driving module 15A may include a ring frame 154 that is arranged in the periphery of the plurality of pressing members 131A and induces the plurality of pressing members 131A to move from the expansion position 1311 to the contraction position 1312 during a vertical movement process, and a motor 155 that provides a driving force that moves the ring frame 154 in the vertical direction.

At least one of the outer circumferential surface the plurality of pressing members 131A and the inner circumferential surface of the ring frame 154 may include guide surfaces 1341 and 1541 that induce rotation of the plurality of pressing members 131A during a vertical movement of the ring frame 154. For example, the guide surfaces 1341 and 1541, which are inclined with respect to the vertical direction, may be arranged on the outer circumferential surface of the plurality of pressing members 131A and the inner circumferential surface of the ring frame 154, respectively.

In the variable stiffness joint structure 10A according to an embodiment, when the ring frame 154 is moved upward by the motor 155, the plurality of pressing members 131A move from the expansion position 1311 to the contraction position 1312. As the plurality of pressing members 131A move to the contraction position 1312 and pressurize the central module 11, a frictional force is applied between the pressing members 131A and the central module 11A. Accordingly, the rotation between the central module 11A and the pressing module 13A is restricted.

In the variable stiffness joint structure 10A according to an embodiment, when the ring frame 154 is moved downward by the motor 155, the pressing of the ring frame 154 against the plurality of pressing members 131A may be released. The plurality of pressing members 131A may be moved to the expansion position 1311 by the hinge member 132 having elasticity. Accordingly, the contact between at least some of the plurality of pressing members 131A and the central module 11A is released. Accordingly, free rotation between the central module 11A and the pressing module 13A is allowed.

Referring to FIG. 13, in the variable stiffness joint structure 10B according to an embodiment, a driving module 15B may include a pneumatic member 156 arranged between the shell modules 16 and the plurality of pressing members 131. Air or a fluid may flow into or out of the pneumatic member 156 through a hose 157.

When the pneumatic member 156 expands, the plurality of pressing members 131 may be pressed toward the center by the pneumatic member 156, and the plurality of pressing members 131 that have been pressed may move from the expansion position 1311 to the contraction position 1312. As the plurality of pressing members 131 pressurize the central module 11A, a frictional force acts between the pressing members 131 and the central module 11A. Accordingly, the rotation between the central module 11A and a pressing module 13B is restricted.

When the pneumatic member 156 contracts, a pressurizing force by the pneumatic member 156 is released, and the plurality of pressing members 131 may be moved from the contraction position 1312 to the expansion position 1311 by the hinge member 132 having elasticity. The contact between at least some of the plurality of pressing members 131 and the central module 11A is released. Accordingly, free rotation between the central module 11A and the pressing module 13B is allowed.

In the above-described embodiments, the example in which the plurality of pressing members 131 or 131A rotate around the hinge member 132 has been mainly described. However, movement of the plurality of pressing members 131 is not limited thereto and may vary.

For example, as illustrated in FIG. 14, in the variable stiffness joint structure 10C according to an embodiment, a pressing member 131C may move horizontally in the radial direction. The pressing member 131C may move horizontally in the radial direction to pressurize or move away from the central module 11A. A portion of the inner circumferential surface of the pressing member 131C may have a curved surface. For example, the pressing member 131C may be configured to move horizontally in the radial direction, and an upper inner circumferential surface 1310C and a lower inner circumferential surface 1310D may have curved surfaces. The pressing member 131C may move horizontally in the radial direction to pressurize or move away from the central module 11A. A plurality of pressing members 131C may be horizontally moved simultaneously by a driving module 15C including a chuck mechanism 158. The configuration for the chuck mechanism 158 is a general configuration, and thus, a detailed description thereof will be omitted.

Meanwhile, in the above-described embodiments, examples in which the variable stiffness joint structures 10, 10A, 10B, and 10C are applied to the continuum robot 1 have been mainly described. However, the above-described variable stiffness joint structures 10, 10A, 10B, and 10C may be applied to electronic devices in various fields, in addition to the continuum robot 1. For example, the variable stiffness joint structures 10, 10A, 10B, and 10C may be applied to electronic devices that function as haptic devices for providing force feedback to users. The variable stiffness joint structures 10, 10A, 10B, and 10C may be applied to electronic devices for providing virtual reality, electronic devices for remote manipulation of medical devices, electronic devices for remote manipulation of exploration robots, electronic devices used as joints of prosthetic arms/legs, etc.

Preferred embodiments have been mainly described above. It will be understood by those of skill in the art that the disclosure may be implemented in a modified form without departing from the intrinsic characteristics of the disclosure. Therefore, the disclosed embodiments are to be considered in a descriptive sense only, and not for purposes of limitation. The scope of the disclosure is in the claims rather than the above descriptions, and all differences within the equivalent scope should be construed as being included in the disclosure.

In an embodiment, there may be provided a variable stiffness joint structure having a high response speed and a wide stiffness range through a novel joint structure, and a continuum robot including the variable stiffness joint structure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A variable stiffness joint structure comprising:
a central module;
a pressing module that surrounds the central module, and has a grip position in which the central module is radially pressed to block rotation of the central module, and a rotation position in which the central module is released to allow rotation of the central module; and
a driving module configured to provide a driving force to move the pressing module from the rotation position to the grip position,
wherein the pressing module comprises at least one pressing member arranged in a circumferential direction to surround an outer circumferential surface of the central module,
when the pressing module is in the grip position, the at least one pressing member is in a contraction position to be radially retracted, and
when the pressing module is in the rotation position, the at least one pressing member is in an expansion position to be radially extended.

2. The variable stiffness joint structure of claim 1, wherein the at least one pressing member comprises a plurality of pressing members, and
a spacing between the plurality of pressing members when the plurality of pressing members are in the expansion position is greater than the spacing between the plurality of pressing members when the plurality of pressing members are in the contraction position.

3. The variable stiffness joint structure of claim 2, wherein the pressing module is configured such that, when a driving force is not provided to the plurality of pressing members by the driving module, the plurality of pressing members are restored from the contraction position to the expansion position.

4. The variable stiffness joint structure of claim 3, wherein the pressing module further comprises a hinge member that supports the plurality of pressing members such that the plurality of pressing members rotate between the contraction position and the expansion position, and
the hinge member has an elastic force such that the plurality of pressing members are restored from the contraction position to the expansion position.

5. The variable stiffness joint structure of claim 1, wherein the driving module comprises an electropermanent magnet assembly or an electromagnet assembly.

6. The variable stiffness joint structure of claim 1, wherein the central module comprises a plurality of circular plates arranged to face each other in a vertical direction and having circular edges, and
the driving module comprises:
a plurality of permanent magnets arranged between the plurality of circular plates to be spaced apart from each other in the circumferential direction;
a plurality of variable magnets arranged between the plurality of permanent magnets to be spaced apart from each other in the circumferential direction; and
a coil arranged to surround the variable magnets.

7. The variable stiffness joint structure of claim 2, wherein the pressing module further comprises a shell module arranged in a periphery of the plurality of pressing members and configured to prevent the central module from being separated from the plurality of pressing members.

8. The variable stiffness joint structure of claim 2, wherein the driving module comprises:
a ring frame that is arranged in a periphery of the plurality of pressing members and induces the plurality of pressing members to move from the expansion position to the contraction position during a vertical movement of the ring frame; and
a motor to move the ring frame in a vertical direction.

9. The variable stiffness joint structure of claim 7, wherein the driving module further comprises a pneumatic member configured to provide pneumatic pressure to move the plurality of pressing members from the expansion position to the contraction position, and
the pneumatic member is arranged between the shell module and the plurality of pressing members.

10. A continuum robot comprising a plurality of variable stiffness joint structures,
wherein at least one of the plurality of variable stiffness joint structures comprises:
a central module;
a pressing module that surrounds the central module, and has a grip position in which the central module is radially pressed to block rotation of the central module, and a rotation position in which the central module is released to allow rotation of the central module; and
a driving module configured to provide a driving force to move the pressing module from the rotation position to the grip position,
the pressing module comprises at least one pressing member arranged in a circumferential direction to surround an outer circumferential surface of the central module,
when the pressing module is in the grip position, the at least one pressing member is in a contraction position to be radially retracted, and
when the pressing module is in the rotation position, the at least one pressing member is in an expansion position to be radially extended.

11. The continuum robot of claim 10, wherein the central module comprises a plurality of circular plates arranged to face each other in a vertical direction and having circular edges, and
the driving module comprises:
a plurality of permanent magnets arranged between the plurality of circular plates to be spaced apart from each other in the circumferential direction;
a plurality of variable magnets arranged between the plurality of permanent magnets to be spaced apart from each other in the circumferential direction; and
a coil arranged to surround the variable magnets.

12. The continuum robot of claim 10, wherein the at least one pressing member comprises a plurality of pressing members, and
the pressing module further comprises a shell module arranged in a periphery of the plurality of pressing members and configured to prevent the central module from being separated from the plurality of pressing members.

13. An electronic device comprising a plurality of variable stiffness joint structures, wherein at least one of the plurality of variable stiffness joint structures comprises:
a central module;
a pressing module that surrounds the central module, and has a grip position in which the central module is radially pressed to block rotation of the central module, and a rotation position in which the central module is released to allow rotation of the central module; and
a driving module configured to provide a driving force to move the pressing module from the rotation position to the grip position,
the pressing module comprises at least one pressing member arranged in a circumferential direction to surround an outer circumferential surface of the central module,
when the pressing module is in the grip position, the at least one pressing member is in a contraction position to be radially retracted, and
when the pressing module is in the rotation position, the at least one pressing member is in an expansion position to be radially extended.

14. The electronic device of claim 13, wherein the central module comprises a plurality of circular plates arranged to face each other in a vertical direction and having circular edges, and
the driving module comprises:
a plurality of permanent magnets arranged between the plurality of circular plates to be spaced apart from each other in the circumferential direction;
a plurality of variable magnets arranged between the plurality of permanent magnets to be spaced apart from each other in the circumferential direction; and
a coil arranged to surround the variable magnets.

15. The electronic device of claim 13, wherein the at least one pressing member comprises a plurality of pressing members, and
the pressing module further comprises a shell module arranged in a periphery of the plurality of pressing members and configured to prevent the central module from being separated from the plurality of pressing members.

## Amended claims

### Amended claims in accordance with Rule 137(2) EPC.

1. A joint structure comprising:
a central module (11);
a pressing module (13) that surrounds the central module, and has a grip position (1302) in which the central module is radially pressed to block rotation of the central module, and a rotation position (1301) in which the central module is released to allow rotation of the central module; and
a driving module (15) configured to provide a driving force to move the pressing module from the rotation position to the grip position,
wherein the pressing module comprises a plurality of pressing members (131) arranged in a circumferential direction to surround an outer circumferential surface of the central module,
when the pressing module is in the grip position, the plurality of pressing members are in a contraction position (1312) to be radially retracted,
when the pressing module is in the rotation position, the plurality of pressing members are in an expansion position (1311) to be radially extended,
a spacing between the plurality of pressing members when the plurality of pressing members are in the expansion position is greater than the spacing between the plurality of pressing members when the plurality of pressing members are in the contraction position,
wherein the pressing module further comprises a hinge member (132) that supports the plurality of pressing members such that the plurality of pressing members rotate between the contraction position and the expansion position, and
the hinge member has an elastic force such that the plurality of pressing members are restored from the contraction position to the expansion position.

2. The joint structure of claim 1, wherein the driving module comprises an electro permanent magnet assembly or an electromagnet assembly.

3. The joint structure of claim 1, wherein the central module comprises a plurality of circular plates (111) arranged to face each other in a vertical direction and having circular edges, and
the driving module comprises:
a plurality of permanent magnets (151) arranged between the plurality of circular plates to be spaced apart from each other in the circumferential direction;
a plurality of variable magnets (152) arranged between the plurality of permanent magnets to be spaced apart from each other in the circumferential direction; and
a coil (153) arranged to surround the variable magnets.

4. The joint structure of claim 1, wherein the pressing module further comprises a shell module (16) arranged in a periphery of the plurality of pressing members and configured to prevent the central module from being separated from the plurality of pressing members.

5. The joint structure of claim 1, wherein the driving module comprises:
a ring frame (154) that is arranged in a periphery of the plurality of pressing members and induces the plurality of pressing members to move from the expansion position to the contraction position during a vertical movement of the ring frame; and
a motor (155) to move the ring frame in a vertical direction.

6. The joint structure of claim 4, wherein the driving module further comprises a pneumatic member (156) configured to provide pneumatic pressure to move the plurality of pressing members from the expansion position to the contraction position, and
the pneumatic member is arranged between the shell module and the plurality of pressing members.

7. A continuum robot comprising a plurality of joint structures,
wherein at least one of the plurality of joint structures comprises:
a central module (11);
a pressing module (13) that surrounds the central module, and has a grip position (1302) in which the central module is radially pressed to block rotation of the central module, and a rotation position (1301) in which the central module is released to allow rotation of the central module; and
a driving module (15) configured to provide a driving force to move the pressing module from the rotation position to the grip position,
the pressing module comprises a plurality of pressing members (131) arranged in a circumferential direction to surround an outer circumferential surface of the central module,
when the pressing module is in the grip position, the plurality of pressing members (131) are in a contraction position (1312) to be radially retracted, and
when the pressing module is in the rotation position, the plurality of pressing members (131) are in an expansion position (1312) to be radially extended,
a spacing between the plurality of pressing members when the plurality of pressing members are in the expansion position is greater than the spacing between the plurality of pressing members when the plurality of pressing members are in the contraction position,
wherein the pressing module further comprises a hinge member (132) that supports the plurality of pressing members such that the plurality of pressing members rotate between the contraction position and the expansion position, and
the hinge member has an elastic force such that the plurality of pressing members are restored from the contraction position to the expansion position.

8. The continuum robot of claim 7, wherein the central module comprises a plurality of circular plates arranged to face each other in a vertical direction and having circular edges, and
the driving module comprises:
a plurality of permanent magnets arranged between the plurality of circular plates to be spaced apart from each other in the circumferential direction;
a plurality of variable magnets arranged between the plurality of permanent magnets to be spaced apart from each other in the circumferential direction; and
a coil arranged to surround the variable magnets.

9. The continuum robot of claim 7, wherein the at least one pressing member comprises a plurality of pressing members, and
the pressing module further comprises a shell module arranged in a periphery of the plurality of pressing members and configured to prevent the central module from being separated from the plurality of pressing members.

10. An electronic device comprising a plurality of joint structures,
wherein at least one of the plurality of joint structures comprises:
a central module (11);
a pressing module (13) that surrounds the central module, and has a grip position (1302) in which the central module is radially pressed to block rotation of the central module, and a rotation position (1301) in which the central module is released to allow rotation of the central module; and
a driving module (15) configured to provide a driving force to move the pressing module from the rotation position to the grip position,
the pressing module comprises a plurality of pressing members (131) arranged in a circumferential direction to surround an outer circumferential surface of the central module,
when the pressing module is in the grip position, the plurality of pressing members (131) are is in a contraction position (1312) to be radially retracted, and
when the pressing module is in the rotation position, the plurality of pressing members (131) are in an expansion position (1311) to be radially extended,
a spacing between the plurality of pressing members when the plurality of pressing members are in the expansion position is greater than the spacing between the plurality of pressing members when the plurality of pressing members are in the contraction position,
wherein the pressing module further comprises a hinge member (132) that supports the plurality of pressing members such that the plurality of pressing members rotate between the contraction position and the expansion position, and
the hinge member has an elastic force such that the plurality of pressing members are restored from the contraction position to the expansion position.

11. The electronic device of claim 10, wherein the central module comprises a plurality of circular plates arranged to face each other in a vertical direction and having circular edges, and
the driving module comprises:
a plurality of permanent magnets arranged between the plurality of circular plates to be spaced apart from each other in the circumferential direction;
a plurality of variable magnets arranged between the plurality of permanent magnets to be spaced apart from each other in the circumferential direction; and
a coil arranged to surround the variable magnets.

12. The electronic device of claim 10, wherein the at least one pressing member comprises a plurality of pressing members, and
the pressing module further comprises a shell module arranged in a periphery of the plurality of pressing members and configured to prevent the central module from being separated from the plurality of pressing members.
